Europäisches Patentamt

European Patent Office

Office européen des brevets

(11) Veröffentlichungsnummer: **0 176 090**
A2

## (12) EUROPÄISCHE PATENTANMELDUNG

(21) Anmeldenummer: 85112154.1

(22) Anmeldetag: 25.09.85

(51) Int. Cl.⁴: **G 07 C 9/00**

(30) Priorität: 28.09.84 DE 8428610 U

(43) Veröffentlichungstag der Anmeldung:
02.04.86 Patentblatt 86/14

(84) Benannte Vertragsstaaten:
AT DE GB NL SE

(71) Anmelder: Abel, Inga
Siegfriedstrasse 35
D-4000 Düsseldorf 11(DE)

(72) Erfinder: Abel, Inga
Siegfriedstrasse 35
D-4000 Düsseldorf 11(DE)

(74) Vertreter: Patentanwälte Dipl.-Ing. Alex Stenger
Dipl.-Ing. Wolfram Watzke Dipl.-Ing. Heinz J. Ring
Kaiser-Friedrich-Ring 70
D-4000 Düsseldorf 11(DE)

(54) Einrichtung zur Überwachung von Personen innerhalb offener und halboffener Anstalten sowie Armband zur Verwendung mit dieser Einrichtung.

(57) Die Erfindung betrifft eine Einrichtung zur Überwachung von Personen, insbesondere psychisch Kranker oder an Gedächtnisschwund Leidender, innerhalb offener und halboffener Anstalten. Um bei geringem Personaleinsatz sicherzustellen, daß keine der zu überwachenden Personen die Anstalt unerkannt oder unerlaubt verläßt, ist an jedem Ausgang der Anstalt eine Vorrichtung zur Erzeugung eines Signalfeldes angeordnet, das ein optisches und/oder akustisches Signal auslöst, sobald in das Signalfeld eine der zu überwachenden Personen gelangt, die ein Armband aus einem bandförmigen Element trägt, dessen Enden ohne Spezialwerkzeug unlösbar und derart miteinander verbunden sind, daß der Umfang des Armbandes kleiner als der kleinstmögliche Umfang der Hand ist, und das mindestens teilweise aus einem Material hergestellt und/oder mit einer Einlage oder einem unlösbaren Zusatzteil versehen ist, das beim Passieren des Signalfeldes ein Signal auslöst.

Fig. 3

**Einrichtung zur Überwachung von Personen innerhalb offener und halboffener Anstalten sowie Armband zur Verwendung mit dieser Einrichtung**

Die Erfindung betrifft eine Einrichtung zur Überwachung von Personen, insbesondere psychisch Kranker oder an Gedächtnisschwund Leidender, innerhalb offener und halboffener Anstalten sowie ein Armband zur Verwendung mit derartigen Einrichtungen.

Es gibt eine Vielzahl von offenen oder halboffenen Anstalten, in denen psychisch Kranke oder an Gedächtnisschwund Leidende leben, die davor geschützt werden müssen, die Ausgänge der Anstalt ohne Begleitpersonal zu passieren, da sie sich insbesondere im Straßenverkehr Gefahren aussetzen, denen sie aufgrund ihres Zustandes nicht gewachsen sind. Eine Unterbringung dieser Personen in geschlossenen Anstalten ist andererseits nicht erwünscht, weil sie durch einen derartigen Abschluß der Anstalt einer zusätzlichen psychischen Belastung ausgesetzt würden.

Da es bei offenen und halboffenen Anstalten infolge des Personalmangels nicht möglich ist, jede einzelne Person am Ausgang zu kontrollieren, soll mit der vorliegenden Erfindung eine Einrichtung zur überwachung von Personen innerhalb of-

Telefon (02 11) 57 21 31 · Telex: 85 88 429 pate d · Telegrammadresse: Rheinpatent · Postscheckkonto Köln (BLZ 370 100 50) 2276 10 - 503

fener und halboffener Anstalten vorgeschlagen werden, die bei
nur geringem Personaleinsatz sicherstellt, daß keine der zu
überwachenden Personen die Anstalt unerkannt und unerlaubt
verläßt.

Zu diesem Zweck wird mit der Erfindung vorgeschlagen, an
jedem Ausgang der Anstalt eine Vorrichtung zur Erzeugung
eines Signalfeldes anzuordnen, das ein optisches und/oder
akustisches Signal auslöst, sobald in das Signalfeld eine der
zu überwachenden Personen gelangt, die ein Armband aus einem
bandförmigen Element trägt, dessen Enden ohne Spezialwerkzeug
unlösbar und derart miteinander verbunden sind, daß der Umfang des Armbandes kleiner als der kleinstmögliche Umfang der
Hand ist, und das mindestens teilweise aus einem Material
hergestellt und/oder mit einer Einlage oder einem unlösbaren
Zusatzteil versehen ist, das beim Passieren des Signalfeldes
ein Signal auslöst.

Mit der erfindungsgemäßen Einrichtung und dem zugehörigen
Armband können bestimmte Personen, insbesondere psychisch
Kranke oder an Gedächtnisschwund Leidende innerhalb offener
und halboffener Anstalten, insbesondere Krankenanstalten und
Altersheimen, davor bewahrt werden, unerlaubt die Ausgangspforte zu durchschreiten und sich insbesondere im Straßenverkehr Gefahren auszusetzen, denen sie aufgrund ihres Zustandes
nicht gewachsen sind. Das beim Eintreten einer der zu Überwachenden Personen in das Signalfeld ausgelöste Signal, das
optisch und/oder akustisch sein kann, macht das am Ausgang
beschäftigte Personal darauf aufmerksam, daß eine der zu
überwachenden Personen im Begriff ist, den Ausgang zu verlassen. Es können somit gezielt Überprüfungen vorgenommen
werden, ohne daß sämtliche den Ausgang passierende Personen
überprüft werden müssen.

Bei dem Signalfeld kann es sich um ein mittels einer Sperrschranke erzeugtes magnetisches Feld oder um ein von einem elektronischen System erzeugtes Signalfeld handeln. Bei einer bevorzugten Ausführung ist das elektronische Signalfeld ein durch einen Sender und einen Empfänger erzeugtes Radio-Frequenz-Feld.

Das zur Verwendung mit einer erfindungsgemäßen Einrichtung bestimmte Armband kann gemäß einem weiteren Merkmal der Erfindung ein bandförmiges Element sein, in das ein Magnetstreifen eingelegt ist. Dieser Magnetstreifen erzeugt beim Durchschreiten des von der Sperrschranke erzeugten magnetischen bzw. elektronischen Feldes ein Signal, das die an der Ausgangspforte diensthabende Person darauf aufmerksam macht, daß eine unberechtigte Person versucht, die Pforte zu verlassen. Anstelle des in das bandförmige Element eingelegten Magnetstreifens kann selbstverständlich ein mit dem bandförmigen Element unlösbarer Zusatzteil verwendet werden, um beim Durchschreiten des Magnetfeldes der Sperrschranke ein Signal zu erzeugen. Außerdem ist es möglich, in das vorzugsweise aus hautfreundlichem Kunststoff bestehende Material des bandförmigen Elements magnetisierbare Teile einzubringen, so daß das erfindungsgemäße Armband beim Durchschreiten der Sperrschranke das erforderliche Signal auslöst.

Bei einer besonders preiswerten Ausbildung des erfindungsgemäßen Armbandes wird vorgeschlagen, das eine Ende des bandförmigen Elements mit einem Dorn und das andere Ende mit einer Anzahl von Löchern für den Dorn zu versehen und auf den Dorn ein nur mit einem Spezialwerkzeug lösbares Verriegelungselement aufzusetzen. Diese Ausführungsform ermöglicht einerseits eine Anpassung des Armbandes an die Stärke des Handgelenkes des jeweiligen Benutzers und ein einfaches Anbringen und Abnehmen des Armbandes durch das Personal, das über das notwendige Spezialwerkzeug verfügt, so daß das erfindungsgemäße Armband nur während der Öffnungszeiten der Pforte getragen werden muß, vorzugsweise nachts jedoch abgenommen werden kann.

Auf der Zeichnung sind zwei Ausführungsbeispiele einer erfindungsgemäßen Einrichtung und ein Ausführungsbeispiel des erfindungsgemäßen Armbandes dargestellt, und zwar zeigen:

Fig. 1    eine Einrichtung mit einer Sperrschranke zur Erzeugung eines magnetischen Signalfeldes,

Fig. 2    eine Einrichtung mit einem elektronischen System zur Erzeugung eines Signalfeldes,

Fig. 3    eine perspektivische Darstellung eines Ausführungsbeispieles eines zugehörigen Armbandes,

Fig. 4    eine Draufsicht auf das Armband nach Fig.3 und

Fig. 5    einen Querschnitt gemäß der Schnittlinie V - V in Fig.4.

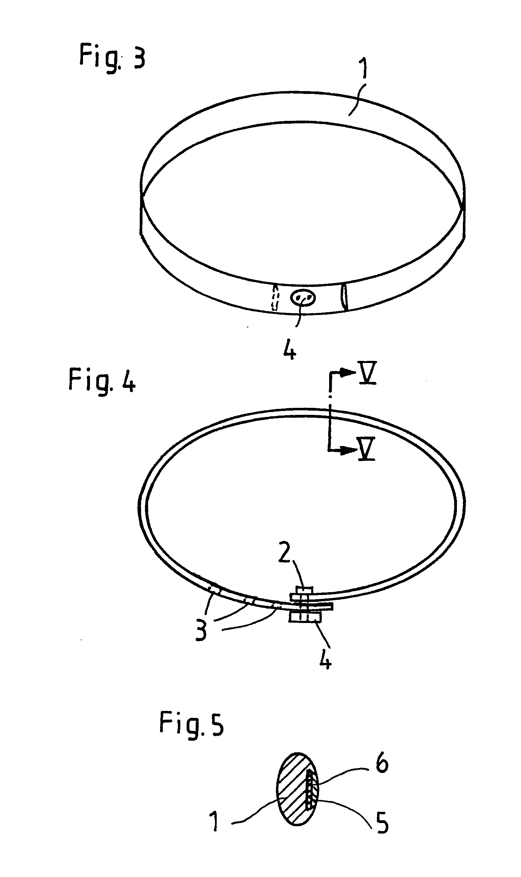

Das anhand eines Ausführungsbeispiels in den Figuren 3 bis 5 dargestellte Armband besteht aus einem bandförmigen Element 1, vorzugsweise aus hautfreundlichem Kunststoff. An einem Ende dieses Elementes 1 ist ein Dorn 2 befestigt, auf den das andere Ende des bandförmigen Elements 1 aufgesteckt werden kann, das zu diesem Zweck mit einer Anzahl von Löchern 3 versehen ist. Auf diese Weise läßt sich das Armband auf einfache Weise an die Stärke des jeweiligen Handgelenks anpassen.

Nach dem Aufstecken des anderen Endes auf den Dorn 2 wird auf diesen ein Verriegelungselement 4 aufgesetzt, dessen auf der Zeichnung nicht dargestellten Riegelteile selbsttätig einrasten und nur mit einem Spezialwerkzeug lösbar sind. Auf der Zeichnung sind zwei im Abstand voneinander liegende Werkzeugöffnungen erkennbar, in die ein gabelförmiges Werkzeug einsteckbar ist, um die Sperrglieder des Verriegelungselements 4 zu lösen.

Beim Ausführungsbeispiel ist gemäß der Schnittdarstellung in Fig.5 in das bandförmige Element 1 ein Magnetstreifen 5 eingelegt, wozu das bandförmige Element 1 auf einem Teil seiner Länge mit einer entsprechenden Aussparung versehen ist. Der Magnetstreifen 5 wird beim Ausführungsbeispiel durch eine Abdeckung 6 am bandförmigen Element 1 festgehalten.

Wenn zu überwachende Personen, insbesondere psychisch Kranke oder an Gedächtnisschwund Leidende, das voranstehend beschriebene Armband tragen, das wegen der unlösbaren Verbindung seiner Enden nur von Berechtigten mit Spezialwerkzeug abgenommen werden kann, wird sichergestellt, daß dieser Personenkreis die Anstalt nicht unerlaubt verlassen kann.

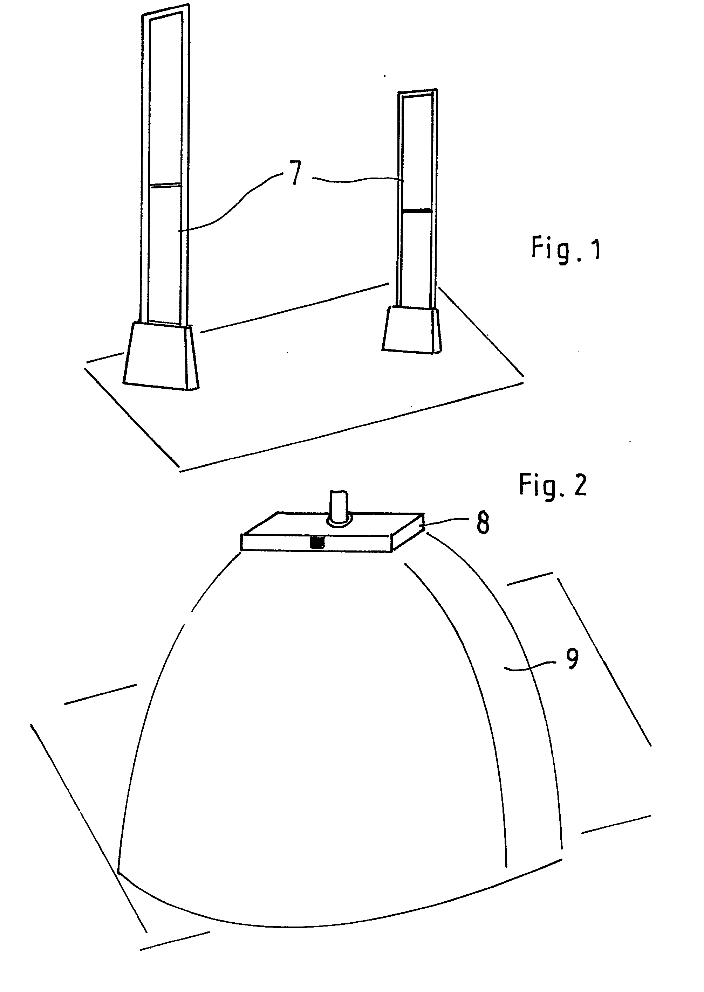

Gemäß der Darstellung in Fig.1 ist an jedem Ausgang der Anstalt eine Vorrichtung zur Erzeugung eines Signalfeldes angeordnet, die beim Ausführungsbeispiel nach Fig.1 aus einer zweiteiligen Sperrschranke 7 besteht, die ein magnetisches Signalfeld erzeugt. Durchschreitet eine ein Armband nach den Figuren 3 bis 5 tragende Person die Sperrschranke 7, löst diese ein akustisches und/oder optisches Signal aus.

In Fig.2 ist eine Einrichtung dargestellt, bei der mittels eines elektronischen Systems 8 ein Signalfeld 9 erzeugt wird, das beispielsweise ein Radio-Frequenz-Feld ist. Gelangt eine ein Armband tragende Person in dieses Signalfeld 9, wird ebenfalls ein akustisches und/oder optisches Signal ausgelöst.

Es ist auf diese Weise sichergestellt, daß selbst innerhalb offener oder halboffener Anstalten, wie Krankenanstalten und Altersheimen, gefährdete Personen die Anstalt nicht unbemerkt verlassen können. Es besteht hierbei die Möglichkeit, das
Signalfeld derart mit einer automatischen Tür zu kombinieren,
daß diese Tür immer dann selbsttätig schließt, wenn das im
Abstand zur Tür erzeugte Signalfeld 9 von einer Person durchschritten wird, die das voranstehend beschriebene, ein Signal
erzeugende Armband trägt. Die Verwendung dieses ohne Spezialwerkzeug unlösbaren Armbandes mit beim Passieren einer Sperrschranke signalerzeugenden Eigenschaften dient somit dem
unauffälligen Schutz der Kranken, ohne daß es notwendig ist,
diese Personen in absolut geschlossenen Anstalten unterzubringen. Außer für Kranke ist das erfindungsgemäße Armband
auch zur Sicherung von Kindern beispielsweise in Kindergärten
geeignet, die an verkehrsreichen Straßen liegen.

0176090

Bezugsziffernliste:

1  bandförmiges Element
2  Dorn
3  Loch
4  Verriegelungselement
5  Magnetstreifen
6  Abdeckung
7  Sperrschranke
8  elektronisches System
9  Signalfeld

W/ph

Patentansprüche :

1. Einrichtung zur Überwachung von Personen, insbesondere psychisch Kranker oder an Gedächtnisschwund Leidender, innerhalb offener und halboffener Anstalten, dadurch gekennzeichnet, daß an jedem Ausgang der Anstalt eine Vorrichtung (7;8) zur Erzeugung eines Signalfeldes (9) angeordnet ist, das ein optisches und/oder akustisches Signal auslöst, sobald in das Signalfeld (9) eine der zu überwachenden Personen gelangt, die ein Armband aus einem bandförmigen Element (1) trägt, dessen Enden ohne Spezialwerkzeug unlösbar und derart miteinander verbunden sind, daß der Umfang des Armbandes kleiner als der kleinstmögliche Umfang der Hand ist, und das mindestens teilweise aus einem Material hergestellt und/oder mit einer Einlage (5) oder einem unlösbaren Zusatzteil versehen ist, das beim Passieren des Signalfeldes (9) ein Signal auslöst.

2. Einrichtung nach Anspruch 1, gekennzeichnet durch ein mittels einer Sperrschranke (7) erzeugtes magnetisches Signalfeld.

3. Einrichtung nach Anspruch 1, gekennzeichnet durch ein von einem elektronischen System (8) erzeugtes Signalfeld (9).

4. Einrichtung nach Anspruch 3, dadurch gekennzeichnet, daß das elektronische Signalfeld (9) ein durch einen Sender und einen Empfänger erzeugtes Radio-Frequenz-Feld ist.

5. Armband zur Verwendung mit einer Einrichtung nach mindestens einem der Ansprüche 1 bis 4, dadurch gekennzeichnet, daß in das bandförmige Element (1) des Armbandes ein Magnetstreifen (5) eingelegt ist.

6. Armband nach Anspruch 5, dadurch gekennzeichnet, daß das eine Ende des bandförmigen Elements (1) mit einem Dorn (2) und das andere Ende mit einer Anzahl von Löchern (3) für den Dorn (2) versehen ist und daß auf den Dorn (2) ein nur mit einem Spezialwerkzeug lösbares Verriegelungselement (4) aufsetzbar ist.

Fig. 1

Fig. 2

0176090

**Fig. 3**

**Fig. 4**

**Fig. 5**